# EUROPEAN PATENT SPECIFICATION

(11) **EP 4 161 018 B1**
(45) Date of publication and mention of the grant of the patent: **21.05.2025**
(21) Application number: 22195003.3
(22) Date of filing: 12.09.2022
(51) Int. Cl.: H04L 41/0896, H04L 43/0876, H04L 43/045, H04L 47/11, H04L 47/24, H04L 47/10, H04L 47/30, H04L 47/32, H04L 41/0806, H04L 41/0823, H04L 41/08, H04L 43/0829, H04L 43/0894, H04L 43/16

(54) **METHOD FOR ALLOCATING RESOURCE FOR STORING VISUALIZATION INFORMATION, APPARATUS, AND SYSTEM**
VERFAHREN ZUR RESSOURCENZUWEISUNG ZUR SPEICHERUNG VON VISUALISIERUNGSINFORMATIONEN, VORRICHTUNG UND SYSTEM
PROCÉDÉ D'ATTRIBUTION DE RESSOURCE POUR STOCKER DES INFORMATIONS DE VISUALISATION, APPAREIL ET SYSTÈME

(30) Priority: 30.09.2021 CN 202111160775
(43) Date of publication of application: 05.04.2023
(73) Proprietor: Huawei Technologies Co., Ltd., Shenzhen, Guangdong 518129, (CN)
(72) Inventor: HUANG, Chao, Shenzhen, 518129 (CN); LI, Nan, Shenzhen, 518129 (CN)
(74) Representative: Thun, Clemens

(56) References cited:
- EP-A1- 3 826 245
- US-B1- 8 797 877
- US-B1- 9 112 818

## Description

### TECHNICAL FIELD

This application relates to the field of communication technologies, and in particular, to a method for allocating a resource for storing visualization information, an apparatus, and a system.

### BACKGROUND

In the field of automatic network O&M, a network device sends collected visualization information to an analysis platform. The analysis platform uses manual experience or artificial intelligence (artificial intelligence, AI) algorithms to comprehensively analyze and visualize the visualization information, so that automatic network management and O&M are implemented. Specifically, this manner may be applied to areas such as a network exception alarm, topology management, congestion management, a capacity expansion alarm, and service exception analysis.

In a process in which the network device collects the visualization information, a storage resource is allocated to each information collection unit to store visualization information of the unit. In an example of queue management, the network device allocates a storage resource to each queue to store visualization information of the queue. A storage resource that needs to be occupied by the visualization information stored by the network device is in direct proportion to a quantity of queues. The foregoing implementation causes a waste of storage resources of the network device.
The document EP 3 826 245 Al shows a method and device for determining a rate of packet de-queuing.

### SUMMARY

The present invention is defined by the independent claims. further advantageous developments are shown by the dependent claims.
In view of this, embodiments of this application provide a method for allocating a resource for storing visualization information, an apparatus, and a system. A first network device determines a first queue based on a constraint condition, where the first queue is a queue that needs to be visualized. Then, the first network device allocates a first storage resource to the first queue, where the first storage resource is used to store visualization information of the first queue, and the visualization information is information used to visualize the first queue.
Therefore, occupation of storage resources in the first network device is reduced.

### BRIEF DESCRIPTION OF DRAWINGS

FIG. 1 is a schematic diagram of a network connection according to an embodiment of this application;
FIG. 2 is a flowchart of visualizing a first queue according to an embodiment of this application;
FIG. 3 is another flowchart of visualizing a first queue according to an embodiment of this application;
FIG. 4 is a schematic diagram of a structure of a first network device 1000 according to an embodiment of this application;
FIG. 5 is a schematic diagram of a hardware structure of a first network device 1100 according to an embodiment of this application;
FIG. 6 is a schematic diagram of a hardware structure of a first network device 1200 according to an embodiment of this application;
FIG. 7 is a schematic diagram of a structure of a second network device 2000 according to an embodiment of this application;
FIG. 8 is a schematic diagram of a hard structure of a second network device 2100 according to an embodiment of this application; and
FIG. 9 is a schematic diagram of a hard structure of a second network device 2200 according to an embodiment of this application.

### DESCRIPTION OF EMBODIMENTS

The following separately provides detailed descriptions by using specific embodiments.

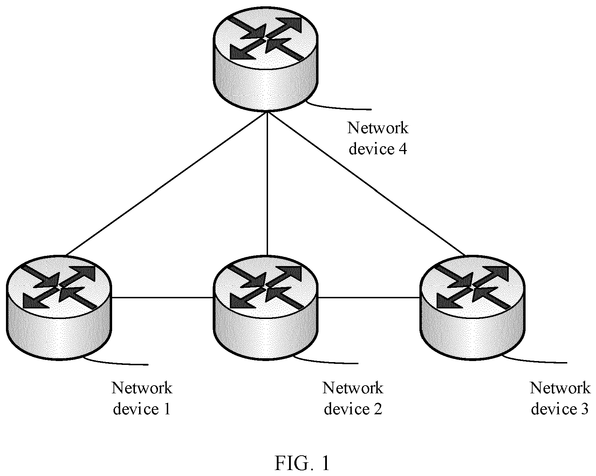

FIG. 1 is a schematic diagram of a network connection according to an embodiment of this application. For example, FIG. 1 relates to a network, including a network device 1, a network device 2, a network device 3, and a network device 4. The network device 1 is connected to the network device 2 through a communication link, the network device 2 is connected to the network device 3 through a communication link, and the network device 4 is connected to the network device 1, the network device 2, and the network device 3 separately through a communication link.

For example, the network shown in FIG. 1 may be used in a data center (data center, DC) network. The data center network includes a top of rack (top of rack, TOR), and a spine (Spine), and further includes a controller. The network device 1 and the network device 3 shown in FIG. 1 correspond to TOR devices of a data center, and are respectively a TOR 1 and a TOR 2. The network device 2 shown in FIG. 1 corresponds to a spine device in the data center, and the network device 4 shown in FIG. 1 corresponds to a controller device in the data center. The TOR 1 communicates with the spine through a communication link, the spine communicates with the TOR 2 through a communication link, and the controller device communicates with the TOR 1, the TOR 2, and the spine separately through a communication link.

For example, the network shown in FIG. 1 may be used in an in-situ operation, administration and maintenance (in-situ operation, administration and maintenance, IOAM) network. The IOAM network includes an ingress node, a transit node, an egress node, and an analyzer. The ingress node corresponds to the network device 1 shown in FIG. 1, the transit node corresponds to the network device 2 shown in FIG. 1, the egress node corresponds to the network device 3 shown in FIG. 1, and the analyzer corresponds to the network device 4 shown in FIG. 1. The ingress node communicates with the transit node through a communication link, the transit node communicates with the egress node through a communication link, and the egress node communicates with the analyzer through a communication link.

The following uses visualization of a queue in the scenario in FIG. 1 as an example to describe an implementation of allocating a resource by a network device. The resource is used to store visualization information of the queue. In this embodiment, traffic is sent from the network device 1 to the network device 2 and then sent to the network device 3. The traffic is stacked in a buffer of a corresponding queue in the network device, and a queue length is a size of a buffer occupied by the stacked traffic that is in the queue. The network device 1, the network device 2, and the network device 3 collect visualization information of queues on respective devices, for example, queue lengths of the queues, and send the collected visualization information to the network device 4. Then, the network device 4 analyzes and outputs the visualization information. That the network device 1 collects visualization information of queues is used as an example. The network device 1 needs to allocate a separate storage resource to each queue to store visualization information of the queue, and the network device 1 then sends the visualization information of the queues to the network device 4. The network device 1 sends the visualization information of all the queues to the network device 4, which occupies a large amount of network bandwidth. After receiving the visualization information, the network device 4 further needs to obtain useful visualization information through filtering. For example, for a network exception alarm, the network device 4 focuses on an abnormal queue in a network, so that the network device 4 filters the visualization information of all the queues to obtain the abnormal queue, for example, a congested queue, namely, a queue whose queue length is greater than a threshold. A manner in which the network device 2 and the network device 3 each collect visualization information of queues is the same as that of the network device 1. Details are not described herein again.

It can be learned from the foregoing described implementation that, the network device 1 allocates a storage resource to each queue, and stores a large amount of useless visualization information. Actually, the network device 1 only needs to allocate a storage resource to the congested queue, and send visualization information of the congested queue to the network device 4. Consequently, in an existing visualization process, the network device 1 stores the large amount of useless visualization information, and occupies excessive storage resources, which causes a waste of storage resources of the network device 1.

Embodiments of this application provide an implementation of allocating a resource for storing visualization information. The implementation is applied to the network shown in FIG. 1. An example in which the network device 1 allocates a resource for storing visualization information of a queue is used for description. The implementation may also be applied to the network device 2 and the network device 3, and details are not described herein. The network device 1 determines a first queue based on a constraint condition. The first queue is a queue that needs to be visualized. Then, the network device 1 allocates a first storage resource to the first queue, where the first storage resource is used to store visualization information of the first queue, and the visualization information is information used to visualize the first queue. In other words, the network device 1 allocates the first storage resource to the first queue that meets the constraint condition, to store the visualization information of the first queue.

An example is used to describe the foregoing process. There are four queues in the network device 1, and the four queues are a queue 1, a queue 2, a queue 3, and a queue 4. The network device 1 reads registers corresponding to the four queues, to obtain queue lengths of the four queues that are respectively 2 kilobytes (kilobyte, KB), 5 KB, 8 KB, and 45 KB. The constraint condition is that a queue length is greater than 40 KB. In this case, the first network device may determine, based on the constraint condition, that the queue length 45 KB of the queue 4 is greater than 40 KB, and the queue 4 is a queue that needs to be visualized. The queue lengths of the queue 1, the queue 2, and the queue 3 are respectively 2 KB, 5 KB, and 8 KB, and are all less than 40 KB. The queue 1, the queue 2, and the queue 3 are not queues that need to be visualized. Then, the network device 1 allocates the first storage resource to the queue 4, where the first storage resource is used to store visualization information of the queue 4, and the visualization information is information used by the network device 4 to visualize the queue 4.

Therefore, in the foregoing process, the network device 1 does not store a large amount of useless visualization information, and storage resources for storing the useless visualization information are not allocated, so that occupation of storage resources in the network device 1 is reduced.

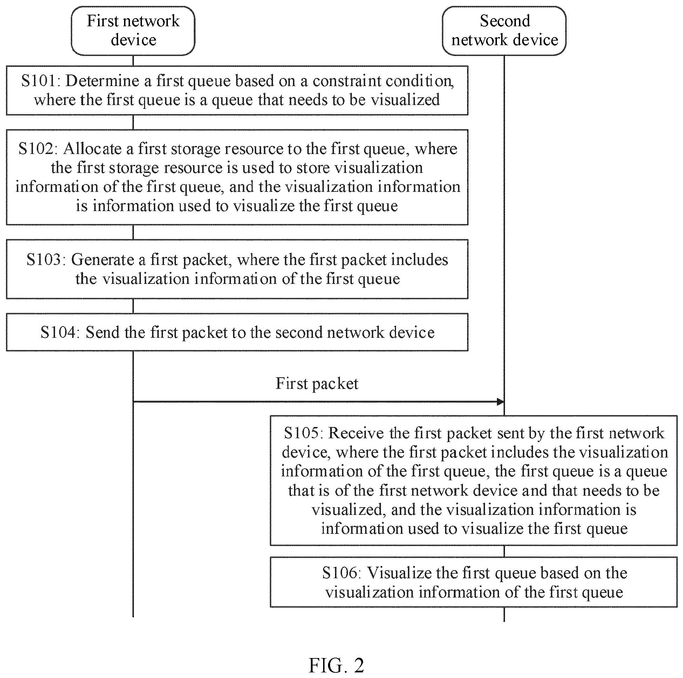

FIG. 2 is a flowchart of visualizing a first queue according to an embodiment of this application. The method shown in FIG. 2 may be applied to the network shown in FIG. 1. In an implementation of this application, an example of allocating a resource for storing visualization information of a queue is used for description. It should be understood that the solutions of this application may also be applied to allocation of a resource for storing visualization information of an item of another type, for example, allocation of a resource for storing visualization information of a port. In this implementation, an example in which a first network device corresponds to the network device 1 in FIG. 1 and a second network device corresponds to the network device 4 in FIG. 1 is used for description. The method of the first network device may also be applied to the network device 2 and the network device 3, and details are not described herein. The method includes S101 to S106 that are specifically as follows.

S101: The first network device determines a first queue based on a constraint condition, where the first queue is a queue that needs to be visualized.

According to the descriptions of the foregoing implementation, in a process of allocating a resource for storing visualization information of a queue, the network device 1 allocates a storage resource to the first queue determined based on the constraint condition. Correspondingly, the network device 1 determines the first queue based on the constraint condition, and the first queue is a queue that needs to be visualized. In other words, the first queue is a queue that meets the constraint condition, and is also a queue that needs to be visualized.

In a possible implementation, a first constraint condition is that a queue length is greater than a first threshold, and that the network device 1 determines the first queue based on the constraint condition includes: The network device 1 determines, based on the first constraint condition, that a queue length of the first queue is greater than the first threshold. Specifically, a manner of obtaining the first threshold that is in the first constraint condition is not limited in this application. The first threshold may be sent by the network device 4 to the network device 1, may be directly configured on the network device 1 by a network management system or a user, or may be obtained based on a default configuration of the network device 1 before delivery. Specifically, an execution manner in which the network device 1 determines the first queue based on the first constraint condition is not limited in this application. In other words, the network device 1 may first obtain the first constraint condition, then determine whether each queue meets the first constraint condition, and determine the first queue if the queue meets the first constraint condition. Alternatively, the network device 1 may first obtain a queue, and then determine whether the queue meets the first constraint condition. Certainly, the network device 1 may alternatively first obtain the first constraint condition, and then directly determine the first queue based on the first constraint condition. Specifically, a queue length is a length of a buffer in a queue in the network device 1, and the network device 1 determines, based on the first constraint condition, that the queue length of the first queue is greater than the first threshold. For example, if the first threshold is 20 KB, the first constraint condition is that a queue length is greater than 20 KB. A queue length of a queue 1 is 45 KB, and a queue length of a queue 2 is 5 KB. The network device 1 may determine, based on the first constraint condition, that the queue length 45 KB of the queue 1 is greater than the first threshold 20 KB. Certainly, a relationship between the queue length and the first threshold is not limited in this application. A first constraint condition that the queue length is less than, less than or equal to, greater than or equal to, or equal to the first threshold also falls within the protection scope of this application.

In another possible implementation, a first constraint condition is that a packet loss rate is greater than a first threshold, and that the network device 1 determines the first queue based on the constraint condition includes: The network device 1 determines, based on the first constraint condition, that a packet loss rate of the first queue is greater than the first threshold. Specifically, a manner of obtaining the first threshold that is in the first constraint condition is not limited in this application, and details are not described herein again. Specifically, an execution manner in which the network device 1 determines the first queue based on the first constraint condition is not limited in this application. Details are not described herein again. Specifically, a packet loss rate is a ratio of lost packets to all packets in a queue in the network device 1. The network device 1 determines, based on the first constraint condition, that the packet loss rate of the first queue is greater than the first threshold. For example, if the first threshold is 2%, the first constraint condition is that a packet loss rate is greater than 2%. A packet loss rate of a queue 1 is 3%, and a packet loss rate of a queue 2 is 1%. The network device 1 may determine, based on the first constraint condition, that the packet loss rate 3% of the queue 1 is greater than the first threshold 2%. Certainly, a relationship between the packet loss rate and the first threshold is not limited in this application, and details are not described herein again.

In still another possible implementation, a first constraint condition is that an enqueue rate is greater than a first threshold, and that the network device 1 determines the first queue based on the constraint condition includes: The network device 1 determines, based on the first constraint condition, that an enqueue rate of the first queue is greater than the first threshold. Specifically, a manner of obtaining the first threshold that is in the first constraint condition is not limited in this application, and details are not described herein again. Specifically, an execution manner in which the network device 1 determines the first queue based on the first constraint condition is not limited in this application. Details are not described herein again. Specifically, an enqueue rate is a rate at which traffic enters a queue of the network device 1. An egress queue is used as an example. Assuming that one port has only one queue, if an enqueue rate is less than a dequeue rate, a queue length is 0; if an enqueue rate is greater than a dequeue rate, packets are stacked in a buffer, and a queue length is greater than 0. The network device 1 determines, based on the first constraint condition, that the enqueue rate of the first queue is greater than the first threshold. For example, if the first threshold is 25 Gbps (Gigabits per second), the first constraint condition is that an enqueue rate is greater than 25 Gbps. An enqueue rate of a queue 1 is 30 Gbps, and an enqueue rate of a queue 2 is 10 Gbps. The network device 1 may determine, based on the first constraint condition, that the enqueue rate 30 Gbps of the queue 1 is greater than the first threshold 25 Gbps. Certainly, a relationship between the enqueue rate and the first threshold is not limited in this application, and details are not described herein again.

In still another possible implementation, a first constraint condition is that a dequeue rate is greater than a first threshold, and that the network device 1 determines the first queue based on the constraint condition includes: The network device 1 determines, based on the first constraint condition, that a dequeue rate of the first queue is greater than the first threshold. Specifically, a manner of obtaining the first threshold that is in the first constraint condition is not limited in this application, and details are not described herein again. Specifically, an execution manner in which the network device 1 determines the first queue based on the first constraint condition is not limited in this application. Details are not described herein again. Specifically, a dequeue rate is a rate at which traffic is forwarded. An egress queue is used as an example. Assuming that one port has only one queue, when a queue length is 0, a dequeue rate of the queue is less than a rate limit of the port; or when a queue length is greater than 0, a dequeue rate of the queue is equal to a rate limit of the port. The network device 1 determines, based on the first constraint condition, that the dequeue rate of the first queue is greater than the first threshold. For example, if the first threshold is 25 Gbps, the first constraint condition is that a dequeue rate is greater than 25 Gbps. A dequeue rate of a queue 1 is 30 Gbps, and a dequeue rate of a queue 2 is 10 Gbps. The network device 1 may determine, based on the first constraint condition, that the dequeue rate 30 Gbps of the queue 1 is greater than the first threshold 25 Gbps. Certainly, a relationship between the dequeue rate and the first threshold is not limited in this application, and details are not described herein again.

In still another possible implementation, the constraint condition includes a first constraint condition, the first constraint condition is that a service type of traffic in a queue is a specified service type, and that the network device 1 determines the first queue based on the constraint condition includes: The network device 1 determines, based on the first constraint condition, that a service type of traffic in the first queue is the specified service type. Specifically, a manner of obtaining the specified service type that is in the first constraint condition is not limited in this application, and details are not described herein again. Specifically, a sequence in which the network device 1 determines the first queue based on the first constraint condition is not limited in this application. Details are not described herein again. Specifically, a service type is of traffic buffered in a queue, and may be a protocol type of the traffic, for example, the Transmission Control Protocol (Transmission Control Protocol, TCP) or the User Datagram Protocol (User Datagram Protocol, UDP), or may be a service type corresponding to a specific service identifier carried in the traffic, for example, a service whose TCP packet header carries a URG flag. The network device 1 determines, based on the first constraint condition, that the service type of traffic in the first queue is the specified service type. For example, if the specified service type is a TCP service type, the first constraint condition is that a service type of traffic in a queue is the TCP service type. A packet of the TCP service type exists in a buffer of a queue 1. The network device 1 may determine, based on the first constraint condition, that a service type of traffic in the queue 1 is the specified TCP service type.

Optionally, the constraint condition further includes a second constraint condition, the second constraint condition is that a queue number is equal to a specified queue number, and that the network device 1 determines the first queue based on the constraint condition includes: The network device 1 determines, based on the second constraint condition, that a queue number of the first queue is equal to the specified queue number. Specifically, a manner of obtaining the specified queue number that is in the second constraint condition is not limited in this application, and details are not described herein again. Specifically, an execution manner in which the network device 1 determines the first queue based on the second constraint condition is not limited in this application. Details are not described herein again. Specifically, a queue number is an index of a queue in a network device. Optionally, the queue may alternatively be identified by using a priority of service traffic. The network device 1 determines, based on the second constraint condition, that the queue number of the first queue is equal to the specified queue number. For example, if the specified queue number in the second constraint condition is a queue 1 on a port 10GE 1/0/1, a queue number of a queue 1 is a queue 1 on the port 10GE 1/0/1, and a queue number of a queue 2 is a queue 2 on the port 10GE 1/0/1, the network device 1 may determine, based on the second constraint condition, that the queue 1 is the first queue. Optionally, the second constraint condition may be a constraint condition executed based on the first constraint condition. In other words, the first queue determined based on the second constraint condition also needs to meet the first constraint condition. For example, if the first constraint condition is that a queue length is greater than 20 KB, the specified queue number in the second constraint condition is the queue 1 on the port 10GE 1/0/1, the queue number of the queue 1 is the queue 1 on the port 10GE 1/0/1 and a queue length is 25 KB, the queue number of the queue 2 is the queue 1 on the port 10GE 1/0/1 and a queue length is 0 KB, and a queue number of a queue 3 is a queue 3 on the port 10GE 1/0/1 and a queue length is 50 KB, the network device 1 may determine, based on the first constraint condition, that the queue 1 and the queue 3 meet the condition, and then determine, based on the second constraint condition, that the queue 1 is the first queue.

Optionally, the first queue may be an egress queue of the network device 1. An egress port is an egress direction of traffic forwarding. The egress port includes a plurality of queues, and specifically, includes eight priority queues.

Optionally, the first queue may alternatively be an ingress queue of the network device 1. An ingress port is an ingress direction of traffic forwarding. The ingress port includes a plurality of queues, and specifically, includes eight priority queues.

S102: The first network device allocates a first storage resource to the first queue, where the first storage resource is used to store visualization information of the first queue, and the visualization information is information used to visualize the first queue.

Specifically, the visualization information includes at least one of the following information: the queue length, the packet loss rate, the enqueue rate, and the dequeue rate. Specifically, the network device 1 allocates the first storage resource to the first queue, and the network device 1 may allocate the storage resource to the first queue based on a size of storage space that needs to be occupied. For example, sizes of the storage space occupied by the visualization information are respectively a queue length (32 bits, bits), a packet loss rate (32 bits), an enqueue rate (32 bits), and a dequeue rate (32 bits), and the network device 1 allocates 4-byte storage space to the first queue. The network device 1 may alternatively allocate the storage resource to the first queue based on a default size of storage space. The default size of the storage space is a preset size of the storage space. Specifically, the first storage resource may be a storage resource on a chip of the network device 1, or may be an external storage resource of the network device 1.

Optionally, the first queue is an egress queue of the network device 1, the visualization information of the first queue further includes first configuration information, and the first configuration information is configuration information that is configured by the network device 1 on the first queue and that is used to manage the egress queue. Specifically, the configuration information may be configuration information of a WRED template of the egress queue, and the WRED template includes a maximum threshold MAX_THLD, a minimum threshold MIN_THLD, and a drop probability Drop_Prob. If a queue length of the egress queue exceeds MIN_THLD, packets in the queue start to be discarded at a probability of Drop_Prob. If the queue length exceeds MAX_THLD, all subsequent enqueue packets in the queue are discarded.

Optionally, the first queue is an ingress queue of the network device 1, the visualization information of the first queue further includes first configuration information, and the first configuration information is configuration information that is configured by the network device 1 on the first queue and that is used to manage the ingress queue. Specifically, the configuration information may be configuration information of a priority-based flow control (priority-based flow control, PFC) template of the ingress queue, and the PFC template includes a reserved threshold "reserved", a backpressure frame triggering threshold xoff, and a backpressure frame stop threshold xon.

Optionally, the network device 1 has one common resource pool, and the first storage resource is a storage resource in the common resource pool. Visualization information of all queues that include the ingress queue and the egress queue is stored in the common resource pool.

Optionally, the network device 1 allocates different resource pools to queues of different types. Specifically, one resource pool is allocated to the ingress queue, and another resource pool is allocated to the egress queue.

S103: The first network device generates a first packet, where the first packet includes the visualization information of the first queue.

Specifically, the first packet may be an Internet Protocol version 6 (internet protocol version 6, IPv6) packet, and the visualization information is carried in an extension header. Alternatively, the first packet may be a generic protocol extension for VxLAN (generic protocol extension for VxLAN, VxLAN-GPE) packet, and the visualization information is carried in a next protocol (next protocol). Alternatively, the first packet may be a generic network virtualization encapsulation (generic network virtualization encapsulation, GENEVE) packet, and the visualization information is carried in an option (option). It should be understood that a protocol format of the first packet is not limited in this application, and another protocol packet that can carry the visualization information also falls within the protection scope of this application. Specifically, the first packet may carry visualization information of one queue, or may carry visualization information of a plurality of queues together.

S104: The first network device sends the first packet to the second network device.

S105: The second network device receives the first packet sent by the first network device, where the first packet includes the visualization information of the first queue, the first queue is a queue that is determined by the first network device based on the constraint condition and that needs to be visualized, and the visualization information is information used to visualize the first queue.

S106: The second network device outputs the visualization information of the first queue.

The network device 4 receives the first packet, parses the visualization information that is in the first packet, and then analyzes and outputs the visualization information. Specifically, for example, in a network exception alarm, the network device 4 receives the first packet, where the first packet carries the visualization information of the first queue in the network device 1, and the visualization information includes: a queue length 500 KB, a packet loss rate 50%, an enqueue rate 20 Gbps, and a dequeue rate 0. Then, the network device 4 analyzes the visualization information, and finds that the dequeue rate is 0 and the packet loss rate is very high. In this way, the network device 4 infers that a reason of a packet forwarding failure may be a downlink fault of an egress port. Therefore, the network device 4 outputs the received visualization information and an analysis result to a connected screen. Optionally, the visualization information and the analysis result are displayed on the screen in a table as shown in Table 1.

**Table 1 Visualization information display manner**

| Device | Queue | Queue length | Packet loss rate | Enqueue rate | Dequeue rate | Analysis result |
|---|---|---|---|---|---|---|
| Network device 1 | First queue | 500 KB | 50% | 20 Gbps | 0 | Downlink fault |

In an implementation of this application, the network device 1 determines the first queue based on the constraint condition, and allocates the first storage resource to the first queue that meets the constraint condition. The first storage resource is used to store the visualization information of the first queue. Therefore, the visualization information of the first queue that is determined based on the constraint condition is stored, a large amount of useless visualization information is not stored, and storage resources for storing the useless visualization information are not allocated, so that occupation of storage resources in the network device is reduced.

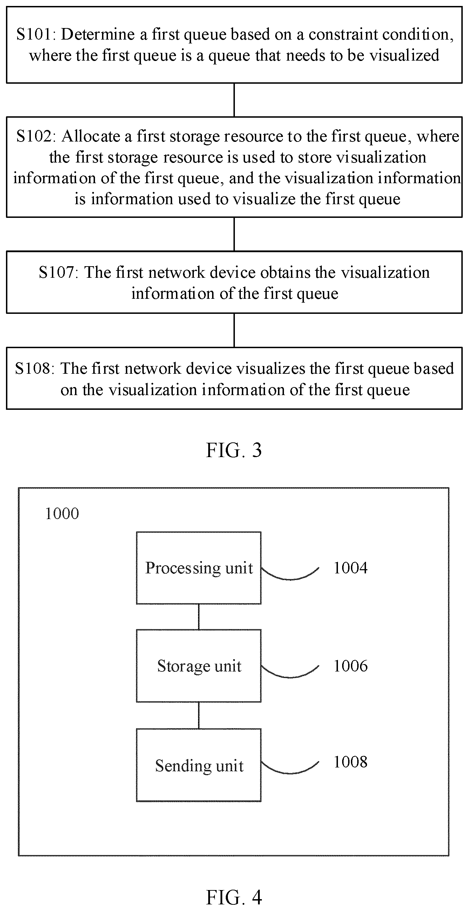

FIG. 3 is another flowchart of visualizing a first queue according to an embodiment of this application. The method shown in FIG. 3 may be applied to the network shown in FIG. 1. In this implementation, an example in which a first network device corresponds to the network device 1 in FIG. 1 is used for description. The method of the first network device may also be applied to the network device 2 and the network device 3, and details are not described herein. The method shown in FIG. 3 includes S101 to S108. S101 and S102 shown in FIG. 3 are the same as S101 and S102 shown in FIG. 2. Details are not described herein again.

S107: The first network device obtains the visualization information of the first queue based on the first storage resource.

Specifically, the network device 1 has a visualization function. The network device 1 obtains the visualization information that is of the first queue and that is stored in the first storage resource, and then analyzes and outputs the visualization information.

Optionally, the network device 1 monitors a status of the first storage resource. When the network device 1 finds that the first storage resource is allocated for use, the network device 1 obtains the visualization information stored in the first storage resource. S108: The first network device outputs the visualization information of the first queue.

Specifically, the network device 1 is connected to a visual display, and the network device 1 displays, on the visual display, the visualization information in the first storage resource and an analysis result. An analysis manner and a display manner are described in an example in S106.

In an implementation of this application, the network device 1 determines the first queue based on the constraint condition, and allocates the first storage resource to the first queue that meets the constraint condition. The first storage resource is used to store the visualization information of the first queue. Therefore, the visualization information of the first queue that is determined based on the constraint condition is stored, a large amount of useless visualization information is not stored, and storage resources for storing the useless visualization information are not allocated, so that occupation of storage resources in the network device is reduced.

FIG. 4 is a schematic diagram of a structure of a first network device 1000 according to an embodiment of this application. The first network device 1000 shown in FIG. 4 may perform corresponding steps that are performed by the first network device in the methods in the foregoing embodiments. As shown in FIG. 4, the first network device 1000 includes a processing unit 1004, a storage unit 1006, and a sending unit 1008. The processing unit 1004 is configured to determine a first queue based on a constraint condition, where the first queue is a queue that needs to be visualized. The processing unit 1004 is further configured to allocate a first storage resource to the first queue, where the first storage resource is used to store visualization information of the first queue, and the visualization information is information used to visualize the first queue. The storage unit 1006 is configured to provide the first storage resource.

In a possible implementation, the constraint condition includes a first constraint condition, the first constraint condition is that a queue length is greater than a first threshold, and that the processing unit 1004 determines a first queue based on a constraint condition includes: The processing unit 1004 determines, based on the first constraint condition, that a queue length of the first queue is greater than the first threshold.

In another possible implementation, the constraint condition includes a first constraint condition, the first constraint condition is that a packet loss rate is greater than a first threshold, and that the processing unit 1004 determines a first queue based on a constraint condition includes: The processing unit 1004 determines, based on the first constraint condition, that a packet loss rate of the first queue is greater than the first threshold.

In still another possible implementation, the constraint condition includes a first constraint condition, the first constraint condition is that an enqueue rate is greater than a first threshold, and that the processing unit 1004 determines a first queue based on a constraint condition includes: The processing unit 1004 determines, based on the first constraint condition, that an enqueue rate of the first queue is greater than the first threshold.

In still another possible implementation, the constraint condition includes a first constraint condition, the first constraint condition is that a dequeue rate is greater than a first threshold, and that the processing unit 1004 determines a first queue based on a constraint condition includes: The processing unit 1004 determines, based on the first constraint condition, that a dequeue rate of the first queue is greater than the first threshold.

In still another possible implementation, the constraint condition includes a first constraint condition, the first constraint condition is that a service type of traffic in a queue is a specified service type, and that the processing unit determines a first queue based on a constraint condition includes: The processing unit 1004 determines, based on the first constraint condition, that a service type of traffic in the first queue is the specified service type.

Optionally, the constraint condition further includes a second constraint condition, the second constraint condition is that a queue number is equal to a specified queue number, and that the processing unit 1004 determines a first queue based on a constraint condition includes: The processing unit 1004 determines, based on the first constraint condition, that a queue number of the first queue is equal to the specified queue number.

Optionally, the visualization information of the first queue includes at least one of the following information: the queue length, the packet loss rate, the enqueue rate, and the dequeue rate.

Optionally, the first queue is an egress queue of the first network device, the visualization information of the first queue further includes first configuration information, and the first configuration information is configuration information that is configured by the first network device on the first queue and that is used to manage the egress queue.

Optionally, the first queue is an ingress queue of the first network device, the visualization information of the first queue further includes first configuration information, and the first configuration information is configuration information that is configured by the first network device on the first queue and that is used to manage the ingress queue.

In a possible implementation, the processing unit 1004 is configured to generate a first packet, where the first packet includes the visualization information of the first queue; and the sending unit 1008 is configured to send the first packet to a second network device.

In another possible implementation, the processing unit 1004 is configured to: obtain the visualization information of the first queue based on the first storage resource, and then output the visualization information of the first queue.

The first network device shown in FIG. 4 may perform corresponding steps that are performed by the first network device in the methods in the foregoing embodiments. In an actual network scenario, the first network device determines the first queue based on the constraint condition, and allocates the first storage resource to the queue that meets the constraint condition. The first storage resource is used to store the visualization information of the first queue. Therefore, the visualization information of the first queue is stored, a large amount of useless visualization information is not stored, and storage resources for storing the useless visualization information are not allocated, so that occupation of storage resources in the network device is reduced.

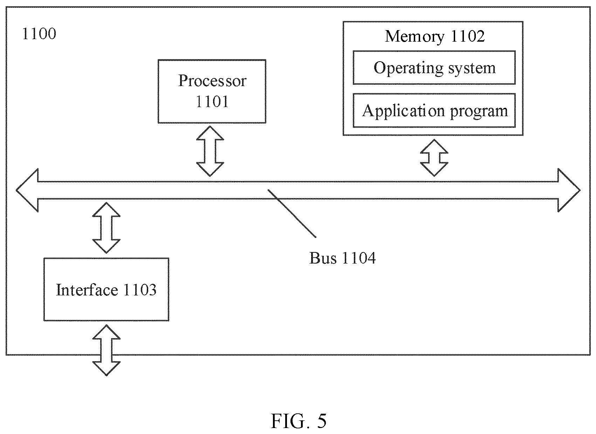

FIG. 5 is a schematic diagram of a hardware structure of a first network device 1100 according to an embodiment of this application. The first network device 1100 shown in FIG. 5 may perform corresponding steps that are performed by the first network device in the methods in the foregoing embodiments.

As shown in FIG. 5, the first network device 1100 includes a processor 1101, a memory 1102, an interface 1103, and a bus 1104. The interface 1103 may be implemented in a wireless or wired manner, and may be specifically a network adapter. The processor 1101, the memory 1102, and the interface 1103 are connected through the bus 1104.

The processor 1101 is configured to perform processing performed by the first network device in the foregoing embodiments. For example, the processor 1101 determines a first queue based on a constraint condition, is further configured to allocate a first storage resource to the first queue, and/or is used in another process of the technology described in this specification. For example, the processor 1101 is configured to support the processes S101, S102, S103, S107, and S108 in FIG. 2 and FIG. 3. The memory 1102 includes an operating system 11021 and an application program 11022, and is configured to store a program, code, or instructions. When executing the program, code, or instructions, the processor or a hardware device may complete a processing process of the first network device in the foregoing method embodiments. Optionally, the memory 1102 may include a read-only memory (English: Read-only Memory, ROM for short) and a random access memory (English: Random Access Memory, RAM for short). The ROM includes a basic input/output system (English: Basic Input/Output System, BIOS for short) or an embedded system. The RAM includes an application program and an operating system. When the first network device 1100 needs to run, the first network device 1100 is started by using a bootloader booting system in the BIOS or the embedded system that is built into the ROM, to boot the first network device 1100 to enter a normal running state. After entering the normal running state, the first network device 1100 runs the application program and the operating system in the RAM, to complete the processing processes related to the first network device in the method embodiments. The interface 1103 may specifically include a transmitter and a receiver, and is configured to send and receive information between the first network device and the second network device in the foregoing embodiments. For example, the interface 1103 is configured to support sending of a first packet. For example, the interface 1103 is configured to support step S104 in FIG. 2.

It may be understood that FIG. 5 shows merely a simplified design of the first network device 1100. In actual application, the first network device may include any quantity of interfaces, processors, or memories.

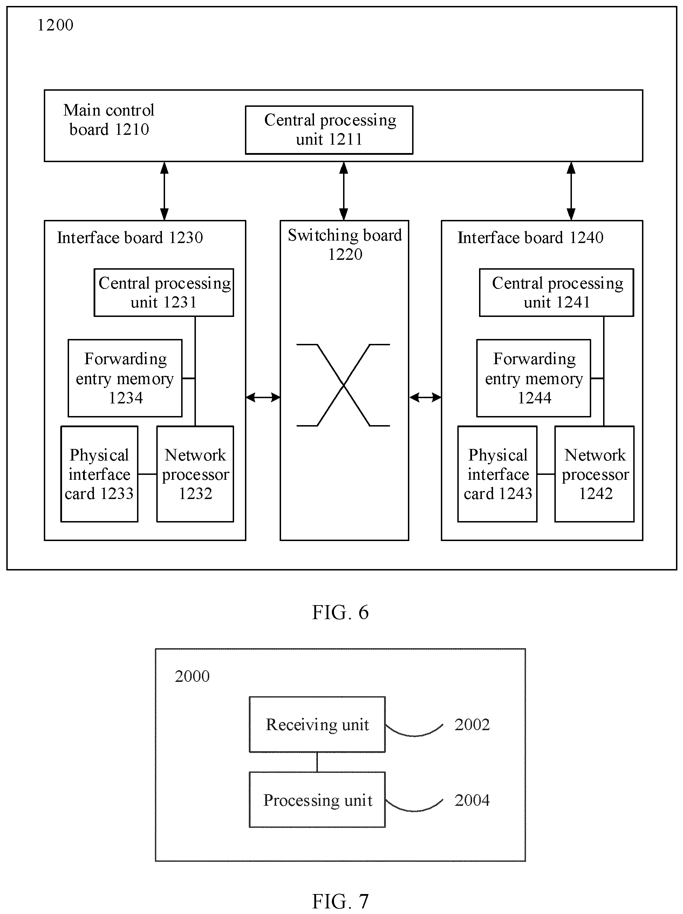

FIG. 6 is a schematic diagram of a hardware structure of another first network device 1200 according to an embodiment of this application. The first network device 1200 shown in FIG. 6 may perform corresponding steps that are performed by the first network device in the methods in the foregoing embodiments.

As shown in FIG. 6, the first network device 1200 includes a main control board 1210, an interface board 1230, a switching board 1220, and an interface board 1240. The main control board 1210, the interface boards 1230 and 1240, and the switching board 1220 are connected to a system backboard through a system bus for communication. The main control board 1210 is configured to complete functions such as system management, device maintenance, and protocol processing. The switching board 1220 is configured to exchange data between the interface boards (where the interface board is also referred to as a line card or a service board). The interface boards 1230 and 1240 are configured to: provide various service interfaces (such as a POS interface, a GE interface, and an ATM interface), and forward a data packet.

The interface board 1230 may include a central processing unit 1231, a forwarding entry memory 1234, a physical interface card 1233, and a network processor 1232. The central processing unit 1231 is configured to: control and manage the interface board, and communicate with a central processing unit on the main control board. The forwarding entry memory 1234 is configured to store a forwarding entry. The physical interface card 1233 is configured to receive and send traffic. The network processor 1232 is configured to control, based on the forwarding entry, the physical interface card 1233 to receive and send the traffic.

Specifically, the physical interface card 1233 is configured to send a first packet to a second network device.

The central processing unit 1211 is configured to: determine a first queue based on a constraint condition; allocate a first storage resource to the first queue; and obtain visualization information of the first queue based on the first storage resource, and output the visualization information.

The central processing unit 1211 is further configured to generate the sent first packet.

The central processing unit 1231 is further configured to control the network processor 1232 to obtain the forwarding entry in the forwarding entry memory 1234, and the central processing unit 1231 is further configured to control the network processor 1232 to receive and send the traffic via the physical interface card 1233.

It should be understood that operations on the interface board 1240 are the same as operations on the interface board 1230 in this embodiment of the present invention. For brevity, details are not described again. It should be understood that the first network device 1200 in this embodiment may correspond to the functions and/or the various implemented steps in the foregoing method embodiments. Details are not described herein again.

In addition, it should be noted that there may be one or more main control boards, and when there are a plurality of main control boards, the main control boards may include an active main control board and a standby main control board. There may be one or more interface boards, and the first network device with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the first network device may not need the switching board, and the interface board implements a service data processing function in an entire system. In a distributed forwarding architecture, the first network device may have at least one switching board, and exchange data between a plurality of interface boards via the switching board, to provide a large-capacity data exchange and processing capability. Therefore, a data access and processing capability of the first network device in the distributed architecture is better than that of the device in the centralized architecture. A specific architecture that is to be used depends on a specific networking deployment scenario. This is not limited herein.

FIG. 7 is a schematic diagram of a structure of a second network device 2000 according to an embodiment of this application. The second network device 2000 shown in FIG. 7 may perform corresponding steps that are performed by the second network device in the methods in the foregoing embodiments. As shown in FIG. 7, the second network device 2000 includes a processing unit 2004 and a receiving unit 2002.

The receiving unit 2002 is configured to receive a first packet sent by a first network device, where the first packet includes visualization information of a first queue, the first queue is a queue that is determined by the first network device based on a constraint condition and that needs to be visualized, and the visualization information is information used to visualize the first queue.

The processing unit 2004 is further configured to output the visualization information of the first queue.

Optionally, the constraint condition includes a first constraint condition, and the first constraint condition includes at least one of the following conditions: a queue length is greater than a first threshold, a packet loss rate is greater than a first threshold, an enqueue rate is greater than a first threshold, a dequeue rate is greater than a first threshold, and a service type of traffic in a queue is a specified service type.

Optionally, the constraint condition further includes a second constraint condition, and the second constraint condition is that a queue number is equal to a specified queue number.

The second network device shown in FIG. 7 may perform corresponding steps that are performed by the second network device in the methods in the foregoing embodiments. In an actual network scenario, the first network device determines the first queue based on the constraint condition, and allocates a first storage resource to the queue that meets the constraint condition. The first storage resource is used to store the visualization information of the first queue. Therefore, the visualization information of the first queue is stored, a large amount of useless visualization information is not stored, and storage resources for storing the useless visualization information are not allocated, so that occupation of storage resources in the network device is reduced.

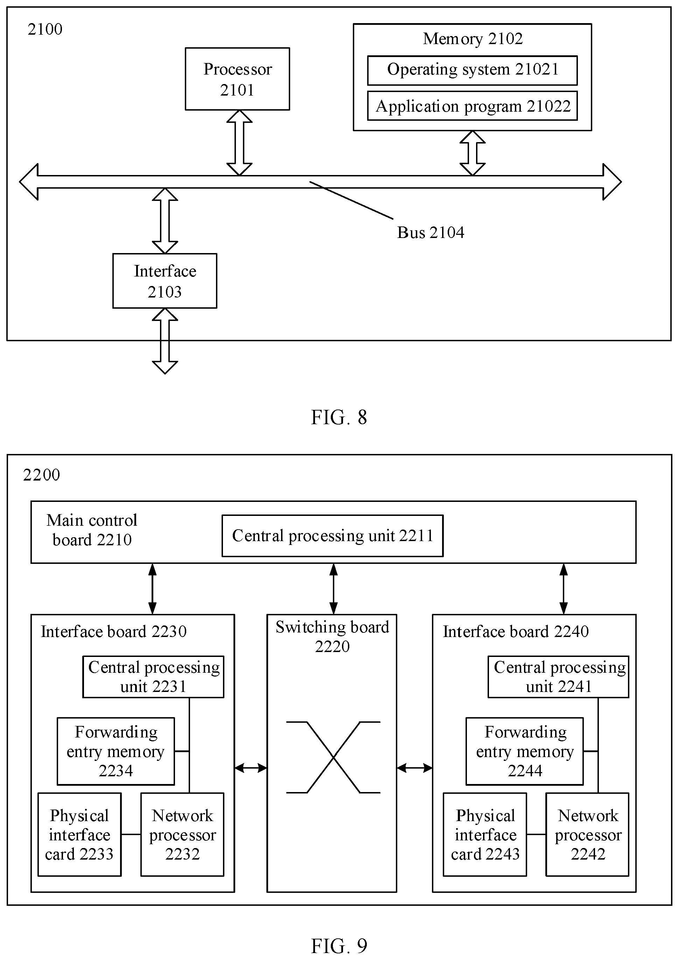

FIG. 8 is a schematic diagram of a hard structure of a second network device 2100 according to an embodiment of this application. The second network device 2100 shown in FIG. 8 may perform corresponding steps that are performed by the second network device in the methods in the foregoing embodiments.

As shown in FIG. 8, the second network device 2100 includes a processor 2101, a memory 2102, an interface 2103, and a bus 2104. The interface 2103 may be implemented in a wireless or wired manner, and may be specifically a network adapter. The processor 2101, the memory 2102, and the interface 2103 are connected through the bus 2104.

The interface 2103 may specifically include a transmitter and a receiver, and is configured to send and receive information between the second network device and the first network device in the foregoing embodiments. For example, the interface 2103 is configured to support receiving of a first packet sent by the first network device. For example, the interface 2103 is configured to support the S105 process in FIG. 2. The processor 2101 is configured to perform processing performed by the second network device in the foregoing embodiments. For example, the processor 2101 is configured to output visualization information of a first queue. For example, the processor 2101 is configured to support the S106 process in FIG. 2. The memory 2102 includes an operating system 21021 and an application program 21022, and is configured to store a program, code, or instructions. When executing the program, code, or instructions, the processor or a hardware device may complete a processing process of the second network device in the foregoing method embodiments. Optionally, the memory 2102 may include a read-only memory (English: Read-only Memory, ROM for short) and a random access memory (English: Random Access Memory, RAM for short). The ROM includes a basic input/output system (English: Basic Input/Output System, BIOS for short) or an embedded system. The RAM includes an application program and an operating system. When the second network device 2100 needs to run, the second network device is started by using a bootloader booting system in the BIOS or the embedded system that is built into the ROM, to boot the second network device 2100 to enter a normal running state. After entering the normal running state, the second network device 2100 runs the application program and the operating system in the RAM, to complete the processing processes related to the second network device in the method embodiments.

It may be understood that FIG. 8 shows merely a simplified design of the second network device 2100. In actual application, the second network device may include any quantity of interfaces, processors, or memories.

FIG. 9 is a schematic diagram of a hardware structure of another second network device 2200 according to an embodiment of this application. The second network device 2200 shown in FIG. 9 may perform corresponding steps that are performed by the second network device in the methods in the foregoing embodiments.

As shown in FIG. 9, the second network device 2200 includes a main control board 2210, an interface board 2230, a switching board 2220, and an interface board 2240. The main control board 2210, the interface boards 2230 and 2240, and the switching board 2220 are connected to a system backboard through a system bus for communication. The main control board 2210 is configured to complete functions such as system management, device maintenance, and protocol processing. The switching board 2220 is configured to exchange data between interface boards (where the interface board is also referred to as a line card or a service board). The interface boards 2230 and 2240 are configured to: provide various service interfaces (such as a POS interface, a GE interface, and an ATM interface), and forward a data packet.

The interface board 2230 may include a central processing unit 2231, a forwarding entry memory 2234, a physical interface card 2233, and a network processor 2232. The central processing unit 2231 is configured to: control and manage the interface board, and communicate with a central processing unit on the main control board. The forwarding entry memory 2234 is configured to store a forwarding entry. The physical interface card 2233 is configured to receive and send traffic. The network processor 2232 is configured to control, based on the forwarding entry, the physical interface card 2233 to receive and send the traffic.

Specifically, the physical interface card 2233 is configured to receive a first packet sent by a first network device. The central processing unit 2211 is configured to process the received first packet.

The central processing unit 2211 is configured to output visualization information of a first queue.

The central processing unit 2231 is further configured to control the network processor 2232 to obtain the forwarding entry in the forwarding entry memory 2234, and the central processing unit 2231 is further configured to control the network processor 2232 to receive and send the traffic via the physical interface card 2233.

It should be understood that operations on the interface board 2240 are the same as operations on the interface board 2230 in this embodiment of the present invention. For brevity, details are not described again. It should be understood that the second network device 2200 in this embodiment may correspond to the functions and/or the various implemented steps in the foregoing method embodiments. Details are not described herein again.

In addition, it should be noted that there may be one or more main control boards, and when there are a plurality of main control boards, the main control boards may include an active main control board and a standby main control board. There may be one or more interface boards, and the second network device with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the second network device may not need the switching board, and the interface board implements a service data processing function in an entire system. In a distributed forwarding architecture, the second network device may have at least one switching board, and exchange data between a plurality of interface boards via the switching board, to provide a large-capacity data exchange and processing capability. Therefore, a data access and processing capability of the second network device in the distributed architecture is better than that of the device in the centralized architecture. A specific architecture that is to be used depends on a specific networking deployment scenario. This is not limited herein.

In addition, an embodiment of this application provides a computer storage medium, configured to store computer software instructions used by the foregoing first network device. The computer storage medium includes a program designed for executing the foregoing method embodiments.

In addition, an embodiment of this application provides a computer storage medium, configured to store computer software instructions used by the foregoing second network device. The computer storage medium includes a program designed for executing the foregoing method embodiments.

An embodiment of this application further includes a communication system. The system includes a first network device and a second network device. The first network device is the first network device in FIG. 4, FIG. 5, or FIG. 6, and the second network device is the second network device in FIG. 7, FIG. 8, or FIG. 9.

Method or algorithm steps described in combination with the content disclosed in this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in user equipment. Certainly, the processor and the storage medium may exist in the user equipment as discrete components.

## Claims

1. A method for allocating a resource for storing visualization information, wherein the method comprises:
determining (S101), by a first network device, a first queue based on a constraint condition, wherein the first queue is a queue that needs to be visualized, and
allocating (S102), by the first network device, a first storage resource to the first queue, wherein the first storage resource is used to store visualization information of the first queue, and the visualization information is information used to visualize the first queue,
wherein the constraint condition comprises a first constraint condition, the first constraint condition is that a packet loss rate is greater than a first threshold, and the determining, by a first network device, a first queue based on a constraint condition comprises:
determining, by the first network device, that a packet loss rate of the first queue is greater than the first threshold based on the first constraint condition.

2. The method according to claim 1, wherein the constraint condition comprises a first constraint condition, the first constraint condition is that a queue length is greater than a first threshold, and the determining, by a first network device, a first queue based on a constraint condition comprises:
determining, by the first network device, that a queue length of the first queue is greater than the first threshold based on the first constraint condition.

3. The method according to claim 1, wherein the constraint condition comprises a first constraint condition, the first constraint condition is that an enqueue rate is greater than a first threshold, and the determining, by a first network device, a first queue based on a constraint condition comprises:
determining, by the first network device, that an enqueue rate of the first queue is greater than the first threshold based on the first constraint condition.

4. The method according to claim 1, wherein the constraint condition comprises a first constraint condition, the first constraint condition is that a dequeue rate is greater than a first threshold, and the determining, by a first network device, a first queue based on a constraint condition comprises:
determining, by the first network device, that a dequeue rate of the first queue is greater than the first threshold based on the first constraint condition.

5. The method according to claim 1, wherein the constraint condition comprises a first constraint condition, the first constraint condition is that a service type of traffic in a queue is a specified service type, and the determining, by a first network device, a first queue based on a constraint condition comprises:
determining, by the first network device that a service type of traffic in the first queue is the specified service type based on the first constraint condition.

6. The method according to any one of claims 2 to 5, wherein the constraint condition further comprises a second constraint condition, the second constraint condition is that a queue number is equal to a specified queue number, and the determining, by a first network device, a first queue based on a constraint condition comprises:
determining, by the first network device, that a queue number of the first queue is equal to the specified queue number based on the second constraint condition.

7. The method according to any one of claims 1 to 6, wherein the visualization information of the first queue comprises at least one of the following information: the queue length, the packet loss rate, the enqueue rate, and the dequeue rate.

8. The method according to claim 7, wherein the first queue is an egress queue of the first network device, the visualization information of the first queue further comprises first configuration information, and the first configuration information is configuration information that is configured by the first network device on the first queue and that is used to manage the egress queue.

9. The method according to claim 7, wherein the first queue is an ingress queue of the first network device, the visualization information of the first queue further comprises first configuration information, and the first configuration information is configuration information that is configured by the first network device on the first queue and that is used to manage the ingress queue.

10. The method according to any one of claims 1 to 9, comprising:
generating (S103), by the first network device, a first packet, wherein the first packet comprises the visualization information of the first queue; and
sending (S104), by the first network device, the first packet to a second network device.

11. The method according to any one of claims 1 to 9, comprising:
obtaining (S107), by the first network device, the visualization information of the first queue based on the first storage resource; and
outputting, by the first network device, the visualization information of the first queue.

12. A first network device, wherein the first network device configured to perform the method according to any one of claims 1 to 11.

13. A communication system, comprising a first network device (1000) and a second network device (2000), wherein the first network device configured to:
determine a first queue based on a constraint condition, wherein the first queue is a queue that needs to be visualized;
allocate a first storage resource to the first queue, wherein the first storage resource is used to store visualization information of the first queue, and the visualization information is information used to visualize the first queue;
generate a first packet, wherein the first packet comprises the visualization information of the first queue; and
send the first packet to a second network device;
the second network device configured to:
receive a first packet sent by a first network device, wherein the first packet comprises visualization information of a first queue, the first queue is a queue that is determined by the first network device based on a constraint condition and that needs to be visualized, and the visualization information is information used to visualize the first queue; and
output the visualization information of the first queue,
wherein the constraint condition comprises a first constraint condition, the first constraint condition is that a packet loss rate is greater than a first threshold, and
the determining, by a first network device, a first queue based on a constraint condition comprises:
determining, by the first network device, that a packet loss rate of the first queue is greater than the first threshold based on the first constraint condition.

14. A computer-readable storage medium, wherein the computer-readable storage medium stores instructions, and when the instructions are run on a processor, a network device is enabled to perform the method according to any one of claims 1 to 11.

## Patentansprüche

1. Verfahren zum Zuweisen einer Ressource zum Speichern von Visualisierungsinformationen, wobei das Verfahren Folgendes umfasst:
Bestimmen (S101) einer ersten Warteschlange durch eine erste Netzwerkvorrichtung basierend auf einer Beschränkungsbedingung, wobei die erste Warteschlange eine Warteschlange ist, die visualisiert werden muss; und
Zuweisen (S102) einer ersten Speicherressource zu der ersten Warteschlange durch die erste Netzwerkvorrichtung, wobei die erste Speicherressource verwendet wird, um Visualisierungsinformationen der ersten Warteschlange zu speichern, und die Visualisierungsinformationen Informationen sind, die verwendet werden, um die erste Warteschlange zu visualisieren,
wobei die Beschränkungsbedingung eine erste Beschränkungsbedingung umfasst, die erste Beschränkungsbedingung ist, dass eine Paketverlustrate größer als ein erster Schwellenwert ist, und das Bestimmen einer ersten Warteschlange durch eine erste Netzwerkvorrichtung basierend auf einer Beschränkungsbedingung Folgendes umfasst:
Bestimmen durch die erste Netzwerkvorrichtung, dass eine Paketverlustrate der ersten Warteschlange größer als der erste Schwellenwert ist, basierend auf der ersten Beschränkungsbedingung.

2. Verfahren gemäß Anspruch 1, wobei die Beschränkungsbedingung eine erste Beschränkungsbedingung umfasst, die erste Beschränkungsbedingung ist, dass eine Warteschlangenlänge größer als ein erster Schwellenwert ist, und das Bestimmen einer ersten Warteschlange durch eine erste Netzwerkvorrichtung basierend auf einer Beschränkungsbedingung Folgendes umfasst:
Bestimmen durch die erste Netzwerkvorrichtung, dass eine Warteschlangenlänge der ersten Warteschlange größer als der erste Schwellenwert ist, basierend auf der ersten Beschränkungsbedingung.

3. Verfahren gemäß Anspruch 1, wobei die Beschränkungsbedingung eine erste Beschränkungsbedingung umfasst, die erste Beschränkungsbedingung ist, dass eine Warteschlangenbildungsrate größer als ein erster Schwellenwert ist, und das Bestimmen einer ersten Warteschlange durch eine erste Netzwerkvorrichtung basierend auf einer Beschränkungsbedingung Folgendes umfasst:
Bestimmen durch die erste Netzwerkvorrichtung, dass eine Warteschlangenbildungsrate der ersten Warteschlange größer als der erste Schwellenwert ist, basierend auf der ersten Beschränkungsbedingung.

4. Verfahren gemäß Anspruch 1, wobei die Beschränkungsbedingung eine erste Beschränkungsbedingung umfasst, die erste Beschränkungsbedingung ist, dass eine Warteschlangenabbaurate größer als ein erster Schwellenwert ist, und das Bestimmen einer ersten Warteschlange durch eine erste Netzwerkvorrichtung basierend auf einer Beschränkungsbedingung Folgendes umfasst: Bestimmen durch die erste Netzwerkvorrichtung, dass eine Warteschlangenabbaurate der ersten Warteschlange größer als der erste Schwellenwert ist, basierend auf der ersten Beschränkungsbedingung.

5. Verfahren gemäß Anspruch 1, wobei die Beschränkungsbedingung eine erste Beschränkungsbedingung umfasst, die erste Beschränkungsbedingung ist, dass ein Diensttyp von Verkehr in einer Warteschlange ein definierter Diensttyp ist, und das Bestimmen einer ersten Warteschlange durch eine erste Netzwerkvorrichtung basierend auf einer Beschränkungsbedingung Folgendes umfasst:
Bestimmen durch die erste Netzwerkvorrichtung, dass ein Diensttyp von Verkehr in der ersten Warteschlange der definierte Diensttyp ist, basierend auf der ersten Beschränkungsbedingung.

6. Verfahren gemäß einem der Ansprüche 2 bis 5, wobei die Beschränkungsbedingung ferner eine zweite Beschränkungsbedingung umfasst, wobei die zweite Beschränkungsbedingung ist, dass eine Warteschlangennummer gleich einer definierten Warteschlangennummer ist, und das Bestimmen einer ersten Warteschlange durch eine erste Netzwerkvorrichtung basierend auf einer Beschränkungsbedingung Folgendes umfasst:
Bestimmen durch die erste Netzwerkvorrichtung, dass eine Warteschlangennummer der ersten Warteschlange gleich der definierten Warteschlangennummer ist, basierend auf der zweiten Beschränkungsbedingung.

7. Verfahren gemäß einem der Ansprüche 1 bis 6, wobei die Visualisierungsinformationen der ersten Warteschlange mindestens eine der folgenden Informationen umfassen: die Warteschlangenlänge, die Paketverlustrate, die Warteschlangenbildungsrate und die Warteschlangenabbaurate.

8. Verfahren gemäß Anspruch 7, wobei die erste Warteschlange eine Ausgangswarteschlange der ersten Netzwerkvorrichtung ist, die Visualisierungsinformationen der ersten Warteschlange ferner erste Konfigurationsinformationen umfassen und die ersten Konfigurationsinformationen Konfigurationsinformationen sind, die durch die erste Netzwerkvorrichtung in der ersten Warteschlange konfiguriert werden und die verwendet werden, um die Ausgangswarteschlange zu verwalten.

9. Verfahren gemäß Anspruch 7, wobei die erste Warteschlange eine Eingangswarteschlange der ersten Netzwerkvorrichtung ist, die Visualisierungsinformationen der ersten Warteschlange ferner erste Konfigurationsinformationen umfassen und die ersten Konfigurationsinformationen Konfigurationsinformationen sind, die durch die erste Netzwerkvorrichtung in der ersten Warteschlange konfiguriert werden und die verwendet werden, um die Eingangswarteschlange zu verwalten.

10. Verfahren gemäß einem der Ansprüche 1 bis 9, umfassend:
Generieren (S103) eines ersten Pakets durch die erste Netzwerkvorrichtung, wobei das erste Paket die Visualisierungsinformationen der ersten Warteschlange umfasst; und
Senden (S104) des ersten Pakets durch die erste Netzwerkvorrichtung an eine zweite Netzwerkvorrichtung.

11. Verfahren gemäß einem der Ansprüche 1 bis 9, umfassend:
Erlangen (S107) der Visualisierungsinformationen der ersten Warteschlange basierend auf der ersten Speicherressource durch die erste Netzwerkvorrichtung; und
Ausgeben der Visualisierungsinformationen der ersten Warteschlange durch die erste Netzwerkvorrichtung.

12. Erste Netzwerkvorrichtung, wobei die erste Netzwerkvorrichtung dazu konfiguriert ist, das Verfahren gemäß einem der Ansprüche 1 bis 11 durchzuführen.

13. Kommunikationssystem, umfassend eine erste Netzwerkvorrichtung (1000) und eine zweite Netzwerkvorrichtung (2000), wobei die erste Netzwerkvorrichtung zu Folgendem konfiguriert ist:
Bestimmen einer ersten Warteschlange basierend auf einer Beschränkungsbedingung, wobei die erste Warteschlange eine Warteschlange ist, die visualisiert werden muss;
Zuweisen einer ersten Speicherressource zu der ersten Warteschlange, wobei die erste Speicherressource verwendet wird, um Visualisierungsinformationen der ersten Warteschlange zu speichern, und die Visualisierungsinformationen Informationen sind, die verwendet werden, um die erste Warteschlange zu visualisieren;
Generieren eines ersten Pakets, wobei das erste Paket die Visualisierungsinformationen der ersten Warteschlange umfasst; und
Senden des ersten Pakets an eine zweite Netzwerkvorrichtung;
wobei die zweite Netzwerkvorrichtung zu Folgendem konfiguriert ist:
Empfangen eines ersten Pakets, das durch eine erste Netzwerkvorrichtung gesendet wird, wobei das erste Paket Visualisierungsinformationen einer ersten Warteschlange umfasst, die erste Warteschlange eine Warteschlange ist, die durch die erste Netzwerkvorrichtung basierend auf einer Beschränkungsbedingung bestimmt wird und die visualisiert werden muss, und die Visualisierungsinformationen Informationen sind, die verwendet werden, um die erste Warteschlange zu visualisieren; und
Ausgeben der Visualisierungsinformationen der ersten Warteschlange,
wobei die Beschränkungsbedingung eine erste Beschränkungsbedingung umfasst, die erste Beschränkungsbedingung ist, dass eine Paketverlustrate größer als ein erster Schwellenwert ist, und
das Bestimmen einer ersten Warteschlange durch eine erste Netzwerkvorrichtung basierend auf einer Beschränkungsbedingung Folgendes umfasst:
Bestimmen durch die erste Netzwerkvorrichtung, dass eine Paketverlustrate der ersten Warteschlange größer als der erste Schwellenwert ist, basierend auf der ersten Beschränkungsbedingung.

14. Computerlesbares Speichermedium, wobei das computerlesbare Speichermedium Anweisungen speichert und wenn die Anweisungen auf einem Prozessor ausgeführt werden, eine Netzwerkvorrichtung in die Lage versetzt wird, das Verfahren gemäß einem der Ansprüche 1 bis 11 durchzuführen.

## Revendications

1. Procédé d'attribution d'une ressource pour stocker des informations de visualisation, le procédé comprenant :
la détermination (S101), par un premier dispositif réseau, d'une première file d'attente sur la base d'une condition de contrainte, la première file d'attente étant une file d'attente qui doit être visualisée ; et
l'attribution (S102), par le premier dispositif réseau, d'une première ressource de stockage à la première file d'attente, la première ressource de stockage étant utilisée pour stocker des informations de visualisation de la première file d'attente, et les informations de visualisation étant des informations utilisées pour visualiser la première file d'attente,
dans lequel la condition de contrainte comprend une première condition de contrainte, la première condition de contrainte est qu'un taux de perte de paquets est supérieur à un premier seuil, et la détermination, par un premier dispositif réseau, d'une première file d'attente sur la base d'une condition de contrainte comprend :
la détermination, par le premier dispositif réseau, qu'un taux de perte de paquets de la première file d'attente est supérieur au premier seuil sur la base de la première condition de contrainte.

2. Procédé selon la revendication 1, dans lequel la condition de contrainte comprend une première condition de contrainte, la première condition de contrainte est qu'une longueur de file d'attente est supérieure à un premier seuil, et la détermination, par un premier dispositif réseau, d'une première file d'attente sur la base d'une condition de contrainte comprend :
la détermination, par le premier dispositif réseau, qu'une longueur de file d'attente de la première file d'attente est supérieure au premier seuil sur la base de la première condition de contrainte.

3. Procédé selon la revendication 1, dans lequel la condition de contrainte comprend une première condition de contrainte, la première condition de contrainte est qu'un taux de mise en file d'attente est supérieur à un premier seuil, et la détermination, par un premier dispositif réseau, d'une première file d'attente sur la base d'une condition de contrainte comprend :
la détermination, par le premier dispositif réseau, qu'un taux de mise en file d'attente de la première file d'attente est supérieur au premier seuil sur la base de la première condition de contrainte.

4. Procédé selon la revendication 1, dans lequel la condition de contrainte comprend une première condition de contrainte, la première condition de contrainte est qu'un taux de sortie de la file d'attente est supérieur à un premier seuil, et la détermination, par un premier dispositif réseau, d'une première file d'attente sur la base d'une condition de contrainte comprend :
la détermination, par le premier dispositif réseau, qu'un taux de sortie de la file d'attente de la première file d'attente est supérieur au premier seuil sur la base de la première condition de contrainte.

5. Procédé selon la revendication 1, dans lequel la condition de contrainte comprend une première condition de contrainte, la première condition de contrainte est qu'un type de service de trafic dans une file d'attente est un type de service spécifié, et la détermination, par un premier dispositif réseau, d'une première file d'attente sur la base d'une condition de contrainte comprend :
la détermination, par le premier dispositif réseau, qu'un type de service de trafic dans la première file d'attente est le type de service spécifié sur la base de la première condition de contrainte.

6. Procédé selon l'une quelconque des revendications 2 à 5, dans lequel la condition de contrainte comprend également une seconde condition de contrainte, la seconde condition de contrainte étant qu'un numéro de file d'attente soit égal à un numéro de file d'attente spécifié, et la détermination, par un premier dispositif réseau, d'une première file d'attente sur la base d'une condition de contrainte comprend :
la détermination, par le premier dispositif réseau, qu'un numéro de file d'attente de la première file d'attente est égal au numéro de file d'attente spécifié sur la base de la seconde condition de contrainte.

7. Procédé selon l'une quelconque des revendications 1 à 6, dans lequel les informations de visualisation de la première file d'attente comprennent au moins l'une des informations suivantes : la longueur de la file d'attente, le taux de perte de paquets, le taux de mise en file d'attente et le taux de sortie de file d'attente.

8. Procédé selon la revendication 7, dans lequel la première file d'attente est une file d'attente de sortie du premier dispositif réseau, les informations de visualisation de la première file d'attente comprennent également des premières informations de configuration, et les premières informations de configuration sont des informations de configuration qui sont configurées par le premier dispositif réseau sur la première file d'attente et qui sont utilisées pour gérer la file d'attente de sortie.

9. Procédé selon la revendication 7, dans lequel la première file d'attente est une file d'attente d'entrée du premier dispositif réseau, les informations de visualisation de la première file d'attente comprennent également des premières informations de configuration, et les premières informations de configuration sont des informations de configuration qui sont configurées par le premier dispositif réseau sur la première file d'attente et qui sont utilisées pour gérer la file d'attente d'entrée.

10. Procédé selon l'une quelconque des revendications 1 à 9, comprenant :
la génération (S103), par le premier dispositif réseau, d'un premier paquet, le premier paquet comprenant les informations de visualisation de la première file d'attente ; et
l'envoi (S104), par le premier dispositif de réseau, du premier paquet à un second dispositif de réseau.

11. Procédé selon l'une quelconque des revendications 1 à 9, comprenant :
l'obtention (S107), par le premier dispositif réseau, des informations de visualisation de la première file d'attente sur la base de la première ressource de stockage ; et
la production en sortie, par le premier périphérique réseau, des informations de visualisation de la première file d'attente.

12. Premier dispositif de réseau, dans lequel le premier dispositif de réseau est configuré pour exécuter le procédé selon l'une quelconque des revendications 1 à 11.

13. Système de communication, comprenant un premier dispositif réseau (1000) et un second dispositif réseau (2000), le premier dispositif réseau étant configuré pour :
déterminer une première file d'attente sur la base d'une condition de contrainte, la première file d'attente étant une file d'attente qui doit être visualisée ;
attribuer une première ressource de stockage à la première file d'attente, la première ressource de stockage étant utilisée pour stocker des informations de visualisation de la première file d'attente, et les informations de visualisation étant des informations utilisées pour visualiser la première file d'attente ;
générer un premier paquet, le premier paquet comprenant les informations de visualisation de la première file d'attente ; et
envoyer le premier paquet à un second dispositif réseau ;
le second dispositif réseau étant configuré pour :
recevoir un premier paquet envoyé par un premier dispositif réseau, le premier paquet comprenant des informations de visualisation d'une première file d'attente, la première file d'attente étant une file d'attente qui est déterminée par le premier dispositif réseau sur la base d'une condition de contrainte et qui doit être visualisée, et les informations de visualisation étant des informations utilisées pour visualiser la première file d'attente ; et
produire en sortie des informations de visualisation de la première file d'attente,
dans lequel la condition de contrainte comprend une première condition de contrainte, la première condition de contrainte est qu'un taux de perte de paquets est supérieur à un premier seuil, et
la détermination, par un premier dispositif réseau, d'une première file d'attente sur la base d'une condition de contrainte comprend :
la détermination, par le premier dispositif réseau, qu'un taux de perte de paquets de la première file d'attente est supérieur au premier seuil sur la base de la première condition de contrainte.

14. Support de stockage lisible par ordinateur, dans lequel le support de stockage lisible par ordinateur stocke des instructions, et lorsque les instructions sont exécutées sur un processeur, un dispositif réseau est activé pour exécuter le procédé selon l'une quelconque des revendications 1 à 11.
